# EUROPEAN PATENT APPLICATION

(11) **EP 1 326 383 A1**
(43) Date of publication of application: **09.07.2003**
(21) Application number: 03396001.4
(22) Date of filing: 03.01.2003
(51) Int. Cl.: H04L 12/28, H04Q 7/32, H04Q 7/38

(54) **Information transmission in a wireless network**

(30) Priority: 08.01.2002 FI 20020019
(71) Applicant: Sonera Oyj, 00510 Helsinki (FI)
(72) Inventor: Korhonen, Jouni, 11100 Rijhimäki (FI); Jokela, Harri, 00350 Helsinki (FI)
(74) Representative: Pursiainen, Timo Pekka

(57) **Abstract**

The idea of the present invention is to transmit connection information at the time of login to a mobile terminal moving in a first network and requesting connection to a server located in a second network. The invention also makes possible the automation of different functions between the mobile terminal and a first network authentication server. A message is sent from the authentication server in response to a request from internet interface program in the mobile terminal. The mobility-client in the mobile terminal analyzes the information about network connections inserted into the header of the message, which was sent according to the messaging protocol used. The mobility-client inserts information required in the message and sends the message to the server, whereby login between the mobility-client and the server is completed automatically without involvement of the internet interface program.

## Description

### Field of the invention

The present invention relates to the initiation of transmission information in a network and to the changing of the connection from one network to another during a session if desirable in a short range radio network, such as a Wireless Local Area Network (WLAN).

### Background of the invention

Data transmission in WLANs can be put into practice in different frequency ranges, such as in microwave, infrared, and radio frequencies. However, radio frequencies are used in the majority of WLAN systems, due to the fact that radio waves better penetrate inside walls and other obstacles. The coverage area offered by WLANs is limited, but the transmission rate is high in comparison with the GSM network (Global System for Mobile Communications), for example. Thus a great number of WLANs served by different operators may be found in a small geographical area. The user may choose a network for use from among ten different WISPs (Wireless Internet Service Providers), for example, where a private WISP is a WLAN operator. The choice of the network is based on criteria significant for the user, such as the price.

In order to browse World Wide Web (WWW) pages in the Internet, a browser is needed. Underlying the user interface represented by browsers is the network and protocols. Application level protocol used to transfer pages in the Web is HTTP (Hypertext Transfer Protocol). It is generic, stateless, object-oriented, request/response protocol for distributed hypermedia information systems. A server conforming to other protocol, such as the File Transfer Protocol (FTP) or Gopher, may also be accessed with an HTTP browser by using a proxy server. The proxy server is a type of gateway which accepts HTTP requests and translates them into a format that is suitable for a server that does not understand HTTP protocol and vice versa.

HTTP enables users to fetch different kinds of resources, such as a text, pictures, or sound. HTTP protocol uses the concept of reference provided by the Universal Resource Identifier (URI), composed of the Uniform Resource Locator (URL) and the Uniform Resource Name (URN). The URI indicates the resource on which a method is to be applied. A Multipurpose Internet Mail Extensions (MIME) format is used for signaling messages.

For HTTP to function properly, the Transmission Control Protocol (TCP) must first set up a connection below HTTP.

As a rule the transmission of hypertext in the Internet consists of four steps: 1) a TCP/IP (Transmission Control Protocol/Internet Protocol) connection set-up between a client computer and a remote server, 2) an HTTP service request from the client computer to the remote server, 3) an HTTP response from the remote server to the client computer, and 4) a TCP/IP connection set-down.

The purpose of a request is indicated by methods or commands. The three most often used methods are GET, HEAD, and POST. The GET method is used to ask for a specified resource (document), such as the internet.htm. That can be initiated by clicking on a hyperlink on a Web page. The HEAD method is used to ask information about a resource (document). This method may be useful for clients who do not need the document itself but only a piece of information from it. The POST method is used when information is required for transfer from a client computer to a remote server. Other methods are: PUT, which is used for writing Web pages; TRACE, which enables the client to follow the path along which the message was sent; DELETE, which informs the server that the specified resource is to be removed; and OPTIONS, which is used to find out what possibilities and requirements are associated with a specific resource or server.

An HTTP transaction consists of headers containing information about the resource and a body containing the actual resource or document. A client application transmits to a remote server a request comprising:
- a HTTP request method,
- URI,
- the version number of the HTTP protocol, and
- a MIME-like message, including request parameters and information about a client application and content of the body.

The server response to the client comprises:
- a status code,
- the actual data, and
- information about the object being returned.

Both requests and responses comprise varying amounts of headers, which further comprise a field name followed by a colon, a space, and a value as follows: Header1: value1.

The currently used WLAN Web-login is described in detail with the help of a simple example in the following.

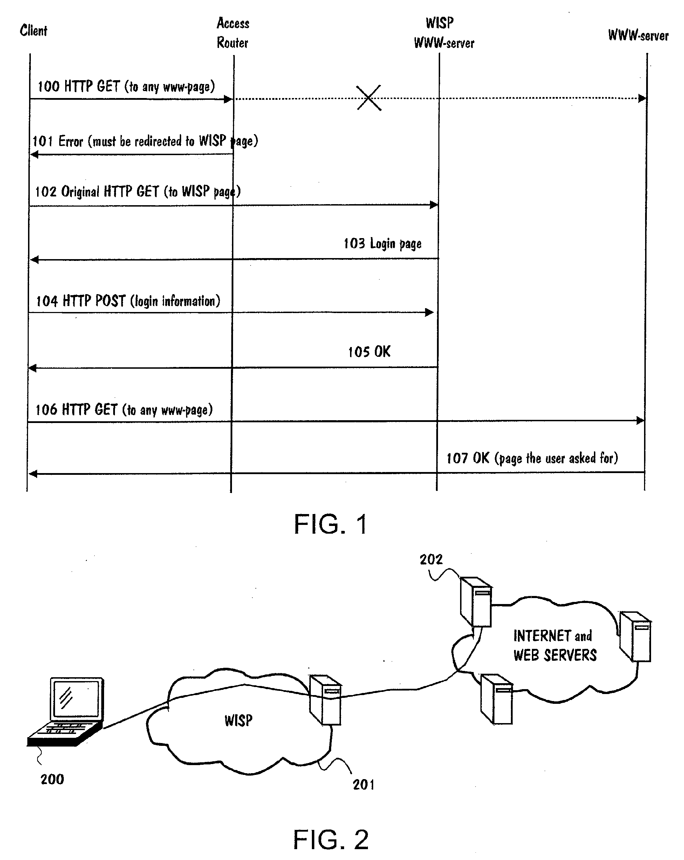

FIG. **1** illustrates with a signaling chart HTTP protocol transmission between different components in the WLAN network.

A mobile terminal, e.g. a laptop computer (later a client) with a WLAN-card, is communicating with a remote Web server through radio waves. The client sends HTTP GET message **100** to a network. An access router catches the message, examines the IP address, and responds at stage **101** with an ERROR message which includes a three-digit status code where the first digit indicates how the request was received. Most often the status code indicates an error, such as: status 403: Forbidden; 404: Not Found; or 500: Internal Server Error. An error can be either a client error or a server error. In the former the syntax in the request is usually incorrect, and in the latter the server has failed to carry out the request completely.

The ERROR message includes a redirection address, i.e. a new URL, such as www.some_name.fi/index.html, which unambiguously specifies a location for a desired resource. The first part of said URL (www.some_name.fi) indicates the host computer containing the resource requested, and the second part of the URL (index.html) is a search path indicating the position of the resource in the internal structure of the host computer. At stage **102** the client sends the original above-mentioned HTTP GET message to a Web-server of a Wireless Internet Service Provider (WISP), who provides its subscribers with access to one or more Internet services.

Irrespective of the content of the message, the Web-server of the Wireless Internet Service Provider sends a LOGIN PAGE to the client, at stage **103**. Normally, the login page comprises fields for a user identifier ID and a password to be typed manually by using the keys of the laptop computer. When the user has input the login information needed, the client sends the information in HTTP POST message **104** to the Web-server of the Wireless Internet Service Provider. If the login is successful, an OK message **105** is sent from the WISP Web server to the client.

At stage **106** the client resends the original HTTP GET message via the access router and the WISP Web server to the Web server asked. The client gets the requested page from the Web server at stage **107**.

The current login method described above has some drawbacks when applied to the WLAN networks. Some of the drawbacks are briefly described in the following.

The user can also use services available in other visited networks with which the user's own operator has signed a roaming agreement. However, one drawback is that the user does not necessarily know anything about the visited networks (such as the price per minute) in advance but only after the user has logged in to the network. When a number of WLANs are served by different operators in the current area of the mobile terminal this leads to a situation where the user must log in to each of the networks in turn to find out the information desired. The user ID and the password must be given repeatedly at each log in. Alternatively the user must find out information about the network from elsewhere, e.g. from a leaflet or a paper. Of course, this is not practical and causes time wastage.

Another drawback is that when a connection to a Web server is started via a WLAN network, a login page of certain operator always appears on the display of the mobile terminal unrequested by the user.

From the operator's point of view, there is no simple way to provide relevant meta-information (i.e. information about information) to the users. On the other hand, from the user's point of view, there is no de facto way to get meta-information about services served by operators.

It can be seen that there is a need for a new service in WLAN networks that overcomes the drawbacks described above.

### Summary of the invention

The idea of the present invention is to transmit connection information, at the time of login, to a mobile terminal moving in a first network and requesting connection to a server located in a second network. The invention also makes possible the automation of different functions between a mobile terminal and a first network authentication server. The first network may be a radio network and the second network the Internet, for example.

The authentication server sends at least one specific parameter in a header in a messaging protocol, such as HTTP, in response to a request addressed, for example, to a Web page from an internet interface program, such as a browser at the mobile terminal. Said parameter belongs to a parameter set which includes information required in login as well as information about network connection.

A mobility-client located in the mobile terminal between the internet interface program and the network interface receives the message from the authentication server and sends the login information required, whereby login between the mobility-client and the server is automatically completed without involvement of the internet interface program.

According to one preferable embodiment, when initiating a network connection, the mobility-client scans available first networks, analyzes information about network connections inserted into the header of the message, according to the messaging protocol used, sent from a plurality of first networks in response to a request from a internet interface program in the mobile terminal. The selection of the first network is performed on the bases of the parameter values received. Then login to the selected network is performed automatically.

According to another preferable embodiment, the first network to be used is selected by the user of the mobile terminal. Selection of the first network is performed on the basis of analysis made by the mobility-client. However, authentication to the network can be performed automatically without any action from the user of the mobile terminal.

According to still another preferable embodiment, during the network connection the mobility-client scans available first networks, sends a request to a plurality of first networks, analyzes the information received in the header of the message, which was sent according to the messaging protocol used, selects one of the first networks, performs login automatically to the first network selected, and disconnects the previous first network connection after the login has succeeded, so that there is no interruption of the service. In other words, the solution can be used in combination with session mobility applications.

It is to be noted that information about the connection may also be inserted into the headers of other messages than the login messages.

### Brief description of the drawings

The invention is described more closely with reference to the accompanying drawings, in which
- FIG. **1**: is a signaling chart illustrating known message transmission between different components in a WLAN network,
- FIG. **2**: illustrates connection between a mobile terminal and a remote Web server through a WLAN network,
- FIG. **3**: is a signaling chart illustrating message transmission between the different components in a WLAN network,
- FIG. **4**: depicts automatic selection of a WLAN network,
- FIG. **5**: illustrates one implementation of the invention, and
- FIG. **6**: is a flowchart illustrating selection of a WLAN network.

### Detailed description of the invention

In the following description of the exemplary embodiments, reference is made to the accompanying drawings. However, it will be apparent to those skilled in the art that the present invention may be practiced in other embodiments that depart from these specific details.

The present invention can be applied to any mobile communication system. The invention will be described below in more detail, mostly by using a Wireless Local Area Network WLAN as an example. In the following, a WISP is a WLAN operator. It is to be noted that although in the following examples parameters needed in communication are inserted in a header of a login page, the parameters can also be inserted in a header of any kind of page.

FIG. **2** illustrates a situation where a user having a mobile terminal, e.g. a laptop computer (hereinafter a client) **200** including a WLAN card, wishes to set up a connection to a remote Web server **202** through a WLAN network **201**. According to the invention the client has means for perceiving specific parameters among payload commonly used (i.e. information about the resource) in a messaging protocol such as a HTTP protocol, decoding the said parameters and performing tasks pertaining to said parameters. All messages received by the client are first analyzed with the help of said means. A similar means is also in the server at the operator maintaining the public WLAN network. Said means at the client end is hereinafter called a mobility-client, and at the operator's end said means is termed a mobility-service.

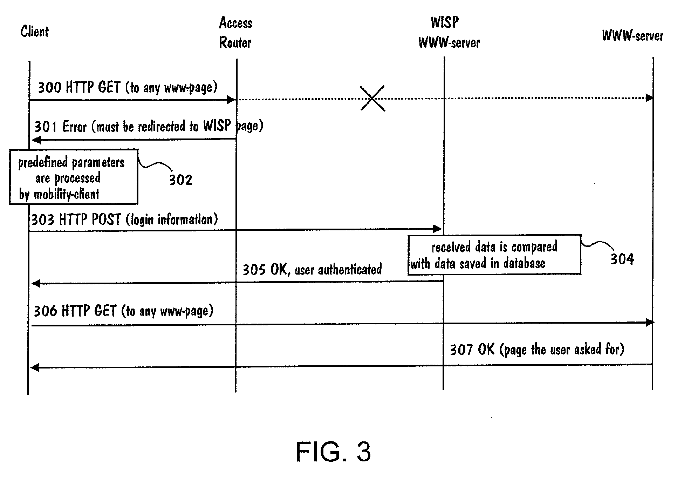

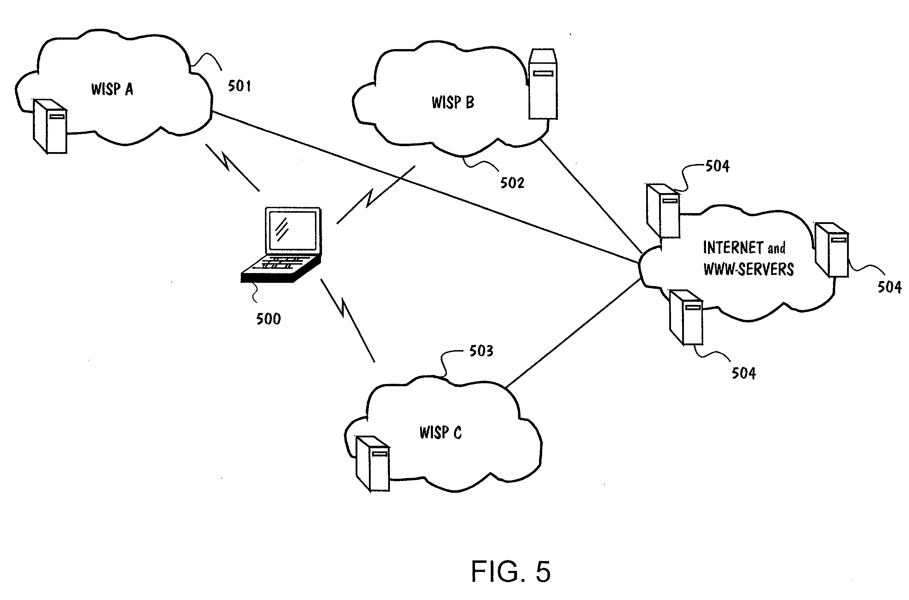

The invention is now described in detail with some examples referring to FIG. **3-6**.

FIG. **3** illustrates messages to be sent between different components in a WLAN network. When a user wishes to establish a connection to a Web server, a client **200** sends a HTTP GET message **300**, which includes at least a URI, a protocol version, and client information. Below is an example of such message according to FIG. **3**:
GET index.html HTTP/1.0
From: jouni@sonera.com

An access router (access server) catches the message, examines the IP address, saves the HTTP address in the memory for later use, and responds with a status line, a protocol version, a success code or an error code, and server information followed by additional headers. Generally the header specifies data such as the action required of the server, a status code, or the type of data being returned. The content of the header is also referred to as meta-information. It is assumed that the access router responds with an ERROR message **301**, after which the connection is dropped. Due to the fact that the HTTP protocol is connectionless, the connection is always dropped once the single request is satisfied. The content of the ERROR message in this particular example is as follows:
HTTP/1.0 302 "new URL"
"server information"
X-AUTH-REQUIRED: yes
X-PROTOCOL-REQIRED: S-HTTP
X-PASSWD-REQUIRED: yes,
where HTTP/1.0 is the protocol version, status code 302 means "moved temporarily", the new URL indicates where the desired information is located, the server information consists of the type of server, date and time, etc.

Headers including parameters starting with X are needed in automatic Web-login. Of course, other information can also be included. A Secure HTTP protocol (S-HTTP) is the protocol for providing confidentiality and authenticity in the Web. It includes instructions for protection of the messages (such as a signature, identification, and encryption) to be sent by the protocol. One additional header states the type of login supported (not shown above).

Once the client receives the message, the mobility-client decodes the content of the message, especially the specific parameters (i.e. parameters needed in the authentication process), and executes the tasks given in a manner that is transparent to the user of the laptop computer at stage **302**. The mobility-client intercepts the message transmission to the Web browser of the client because the browser neither understands nor is able to process said specific parameters. Thus since the user does not see a login page, no action is needed on the part of the user. It is important that all traffic is transmitted through the mobility-client, which is able to intercept the messages to be transmitted further to a Web browser of the client when needed.

The login information required, such as a user identifier ID and a password for executing the authentication tasks, is stored in advance in a memory. Parameters needed for authentication are inserted by the mobility-client in the POST message, as well as information as to how the parameters are to be sent to the WISP Web server. The POST message **303** is sent from the client via the access router to a Wireless Internet Service Provider's WISP Web server. Before sending the message further, the access router establishes a connection between the client and the access server.

At stage **304** the WISP Web server where the mobility-service facility is located performs the authentication by comparing the data stored in the authentication database to the data sent in the POST message. The client receives an OK message **305** from the WISP Web server indicating that the authentication has been successfully processed. The OK message may contain additional information about the WISP, as well as a so-called greetings page. The whole authentication process can be invisible to the user. However, the message may contain a parameter informing the mobility-client whether the information is to be shown to the user on the display of the laptop computer. In that case the user may be informed about how the process is progressing by a small window on the display.

The mobility-client fetches the original HTTP address from the memory and sends the original HTTP GET message **306** to the Web server. In response the Web server sends an OK message **307**, including the requested Web page, via the WISP Web server and the access router to the client. The Web page or document consists of objects or files such as an HTML (HyperText Markup Language) file, a GIF (Graphics Interchange Format), or a JPEG (Joint Photographic Experts Group) image.

The mobility-client sends the message to the Web browser of the client when the user is able to see the contents of the Web page on the display. From now on the mobility-client does not intercept the traffic between the client and the Web server, if no special need arises.

In the above example, it was assumed that both the client and the WISP Web server have specific facility for processing specific parameters, such as parameters needed in automatic login to the WLAN network. Should an operator not support such a function, login is carried out in the same way as in the prior-art example. In other words, the parameters are transparent for such operators, and for that reason the parameters do not cause any harm.

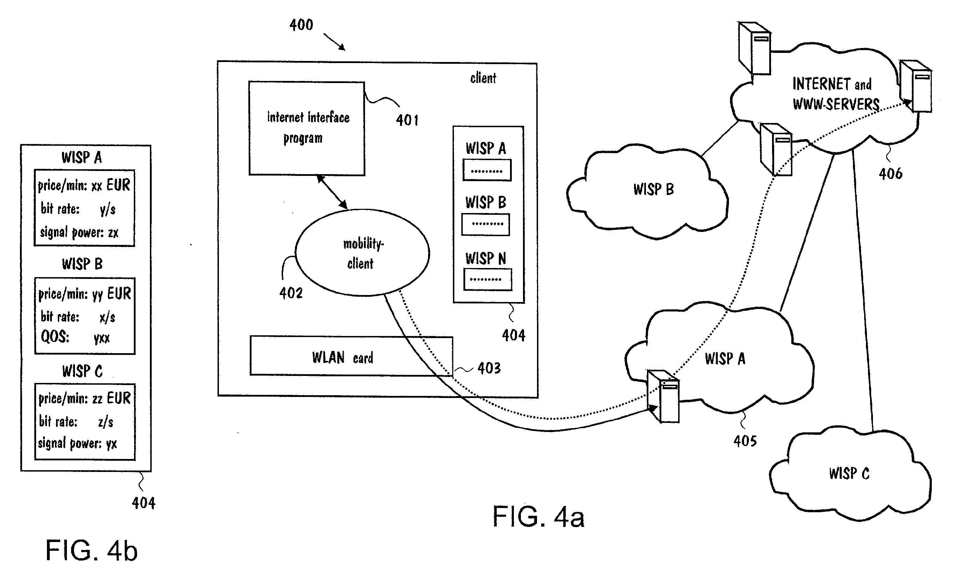

FIG. **4** depicts a principle of one implementation of the invention. A client **400** is a laptop computer having a WLAN card **403**. Thus it has the functionality needed for communicating with WLAN networks. A mobility-client **402** communicates between a Web browser **401** and servers of different WISPs. Information received from Wireless Internet Service Providers WISP A, WISP B, and WISP C may be displayed in the form **404** illustrated in the figure. However, as already mentioned above the mobility-client may make its decision of selection based on at least one predetermined criterion. Thus there may be a number of different criteria with certain condition about which of the criteria is to be given priority.

The mobility-client also monitors the networks in the current service area during the connection between the client and the current WLAN network. If it discovers some other WLAN network in the service area with a price per minute lower than that for the current WLAN network, the mobility-client may disconnect the existing connection and establish a new connection to the lower price network. Of course, disconnection and connection establishment require communication between the client and the WISPs. However, communication and the change of networks can be invisible to the user or alternatively may be suggested to the user in a window.

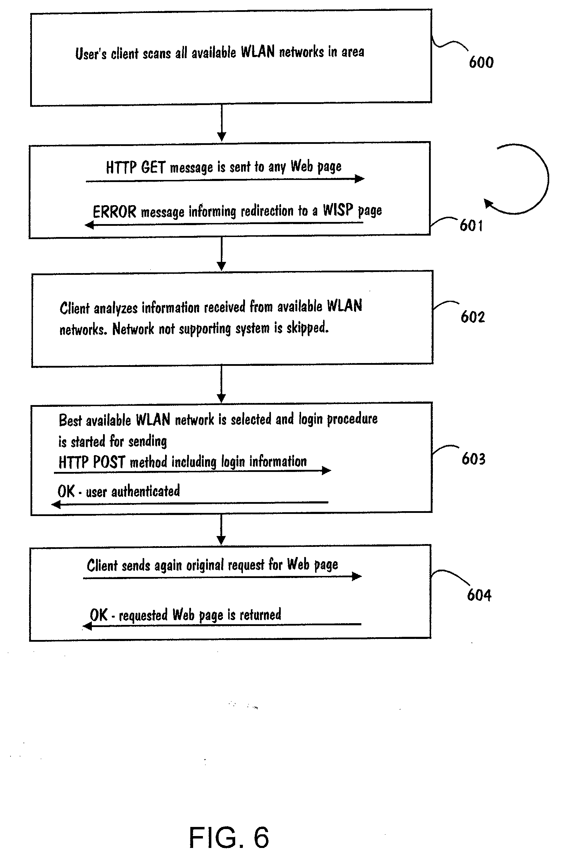

FIG. **5** and **6** illustrate the automatic selection of a public WLAN network. Selection is based on predetermined parameters which the mobility-client of the client and the mobility-service of operator's server are able to process.

Assume that a client **500** wishes to establish a connection to an Internet Web server **504**. The client has means for scanning three different WISPs (Wireless Internet Service Provider), i.e. WISP A **501**, WISP B **502**, and WISP C **503** in the current service area. Further assume that the user has given in advance at least a unique user identifier ID, a password, and some criterion concerning use of WLAN networks, such as the price per minute, price class, bit rate, quality of service or signal power. All this data is stored in a memory in the laptop computer, and at least part of the said data is stored in a database in a server of an operator supporting said specific mobility-service facility.

FIG. **6** is a flow chart showing automatic selection of a WLAN network. The client scans all available WLAN networks in the area at step **600**. Then it sends to each of the WISPs in turn a HTTP GET message addressed to any Web page and containing enhanced headers with specific parameters. An ERROR message informs the client of redirection to a WISP page at step **601**. Once responses are received from the WISPs, the mobility-client analyzes the messages and, taking into account the primary criterion of price per minute, for example, selects the WISP with a response satisfying the criterion given. From those responses that do not contain enhanced headers, the mobility-client recognizes that the WISP concerned does not support mobility-service facility. Based on analysis result the best available WLAN network is selected and automatic login is performed (steps **603** and **604**) in the same manner as in FIG. **3**. Alternatively, information received from different WISPs can be shown on the display of the laptop computer, giving the user an opportunity to compare different values and select the network desired.

Although the invention is designed to be especially suitable for WLAN networks, it is not limited to applications for WLAN networks.

It should be noted that there are many different application possibilities. Depending on each application as well as the wishes of users and operators, the functionality required may vary. This type of functionality operates best when as many operators as possible support the functionality. As already mentioned, it does not cause any harm if some operators do not support said functionality.

The invention is not restricted to use in association with HTTP protocol only, but other messaging protocols can also come into question, such as SIP (Session Initiation Protocol). SIP is a request-response signaling protocol used for establishing sessions in an Internet protocol network. It is used to initiate, terminate, and modify sessions.

The number of specific parameters is not limited. A mobile terminal can be other than a laptop computer, such as a communicator providing the functionality required. In case some WISP does not support the functionality required, different alternatives are available: the specific parameters are either kept in the message or they are dropped from the message at the server of the WISP. The location is not restricted for a server of an operator supporting the functionality needed for offering the service described above. A currently used WLAN network can be displayed to the user in a small window on the display if desired, as well as any useful information associated with the network. Operators or virtual operators with whom the user's own operator has signed a roaming agreement may be defined in the mobility-client.

One possibility for utilizing the present invention is to include parameters needed for showing an advertisement to the user.

Due to the increased use of WLAN networks, an operator must sometimes reduce the bandwidth given to a user. This leads to a situation where maximum bit rate may vary in different hot spots of one operator or in different operators. The present invention enables automatic transfer change from one network to another whenever the need for a better bit rate arises (or when some other primary criterion can be realized on the basis of monitoring different networks).

Different alternatives to be used when the on-going information received during the login is performed are, for example, as follows: automatic authentication by the mobility-client using predetermined and saved authentication parameters; the login page of the predefined operator is opened on the display of the mobile terminal automatically by the mobility-client; re-login is performed automatically by the mobility-client whenever the connection for some reason or other is abruptly disconnected.

In one embodiment of the invention the mobility-client scans the networks in order to find out what kind of session management services are served in different networks. The mobility-client may decide to change the current connection to another one which supports the same session management service currently in use through a different connection. The change may be carried out though the latter connection will be more expensive (if price has lower priority) if another criterion with higher priority can be met providing the current session can be continued without interruption during the change between the said networks.

The parameters needed when the mobility-client communicates with the network can be saved either in the mobile terminal or in a module which is inserted into the mobile terminal, e.g. a SIM-card (Subscriber Identity Module), or both. If the parameters are saved in a SIM-card or smart card, the said parameters can be manipulated either by the user or the operator when needed.

If the user terminal is a multimodal terminal, the mobility-client may also scan different types of networks, such as WLANs or Bluetooth.

The solution is economically advantageous because only slight changes are needed.

## Claims

1. A method for transmitting information between a mobile terminal moving in a first network and a server located in a second network,
**characterized,** when initiating a network connection, by the steps of:
inserting in a header of a message according to the used messaging protocol at least one parameter of a parameter set including information required for performing login and information about network connection, said message being sent by a first network server in response to a request from an internet interface program in the mobile terminal,
sending the said message to a mobility-client located between the internet interface program and the network interface of the mobile terminal,
inserting in the mobility-client, in at least one header of the response login message, the login information required,
sending the response login message to the first network server, whereby login between the mobility-client and the first network server is completed automatically without involvement of the internet interface program.

2. The method as in claim 1, **characterized by** the further steps performed by the mobility-client of:
scanning available first networks,
sending a request to a plurality of first networks,
analyzing information about network connections inserted into the headers of the messages received from said plurality of first networks, and
selecting one of the first networks.

3. The method as in claim 2, **characterized in that**
selection of the first network is based on a set of parameter values comprising at least the values of the transmission bit rate, the connection price per unit time, the quality of service, and the signal power.

4. The method as in claim 1, **characterized in that** when the connection is terminated without user action a new login is performed automatically.

5. The method as in claim 1, **characterized in that** messaging protocol is Hypertext Transfer Protocol (HTTP).

6. The method as in claim 1, **characterized in that** the messaging protocol is Session Initiation Protocol (SIP).

7. The method as in claim 1, **characterized in that** the second network is the Internet.

8. The method as in claim 1, **characterized in that** the first network is a Wireless Local Access Network (WLAN).

9. The method as in claim 1 or 2, **characterized in that** the message is a HyperText Markup Language (HTML) page.

10. The method as in claim 1 or 2, **characterized in that** the message is a Session Initiation Protocol message.

11. The method as in claim 1, **characterized in that** operation of the internet interface program is performed by a browser.

12. A mobile terminal comprising an internet interface program,
**characterized in that** the mobile terminal further comprises a mobility-client adapted to
scan available radio networks,
communicate with access servers,
process information about network connections inserted into the headers of the messages received from said access servers,
select one of the radio networks for accessing a server located in a computer network, and
log automatically without involvement of the internet interface program into the selected network by inserting login information into headers of messages transmitted to the access server.

13. The mobile terminal as in claim 12, **characterized in that** the internet interface program is a browser.

14. An access server located in a radio network, through which connection is established between a mobile terminal in the first network and a server located in a second network,
**characterized in that** the network server located in the first network is adapted to
insert in a header of a message at least one parameter of a parameter set, including information required for performing login and information about network connection, in response to a request from an internet interface program of the mobile terminal, and
communicate with a mobility-client located in the mobile terminal between an internet interface program and the network interface.

15. The access server as in claim 14, **characterized in that** the internet interface program is a browser.
